# EUROPÄISCHE PATENTSCHRIFT

(11) **EP 1 752 746 B1**
(45) Veröffentlichungstag und Bekanntmachung des Hinweises auf die Patenterteilung: **03.12.2008**
(21) Anmeldenummer: 05107333.6
(22) Anmeldetag: 10.08.2005
(51) Int. Cl.: G01G 23/01

(54) **Kalibriergewichtsanordnung für eine elektronische Waage**
Electronic weighing device comprising a coupling assembly for a calibrating weight
Balance électronique avec dispositif de couplage pour une masse étalon

(43) Veröffentlichungstag der Anmeldung: 14.02.2007
(73) Patentinhaber: Mettler-Toledo AG, 8606 Greifensee (CH)
(72) Erfinder: Genoud, Dominique, 8610, Uster (CH); Köppel, Thomas, 8618, Oetwil am See (CH); Emery, Jean-Christophe, 8005, Zürich (CH)

(56) Entgegenhaltungen:
- DE-U1- 20 119 525
- US-A1- 2004 068 985
- "Hebebühnen" 1977, HVBG * Seiten 1-3,14 *
- DUDDEL: "Taschenbuch für den Maschinenbau" 1990, SPRINGER-VERLAG , BERLIN

## Beschreibung

Die Erfindung betrifft eine Kalibriergewichtsanordnung für ein gravimetrisches Messgerät beziehungsweise eine elektronische Waage und insbesondere einen Transfermechanismus für eine Kalibriergewichtsanordnung.

Elektronische Waagen werden häufig mittels eines internen Kalibriergewichts kalibriert. Für eine Kalibrierung wird ein Kalibriergewicht mit einer definierten Masse mit der in einer Kraftmesszelle einer Waage angeordneten Kraftübertragungsvorrichtung oder mit dem Lastaufnahmebereich der Kraftmesszelle in Kraftkontakt gebracht und dann ein Referenzwert ermittelt. Anhand dieses Referenzwerts können weitere Wägeparameter der Waage angeglichen werden. Nach erfolgreicher Kalibrierung wird der Kontakt zwischen dem Kalibriergewicht und der Kraftübertragungsvorrichtung oder dem Lastaufnahmebereich wieder gelöst und das Kalibriergewicht in einer Ruheposition arretiert. Das Kalibriergewicht wird dabei durch einen Transfermechanismus aus einer Ruheposition in eine Kalibrierposition und zurück bewegt. In der Kalibrierposition steht das Kalibriergewicht in Kraftkontakt mit der Kraftmesszelle beziehungsweise mit dem Lastaufnahmebereich; in der Ruheposition besteht kein Kraftkontakt. Bei vielen Waagen sind die Kalibriergewichtsanordnung und die Kraftmesszelle hintereinander angeordnet, wie es in der EP 0 955 530 A1 offenbart ist.

Es gibt verschiedene Transfermechanismen zur Bewegung eines Kalibriergewichts, welches in seiner Ruheposition meist auf einer mit einem Hebesystem verbundenen Auflage liegt.

In der EP 0 468 159 B1 wird eine Kalibriergewichtsanordnung mit einem Kalibriergewicht offenbart, welches über paarweise horizontal gegeneinander verschiebbare Keile vertikal bewegt und so in Kraftkontakt mit der Kraftmesszelle der Waage gebracht wird. Der Antrieb dieses Transfermechanismus erfolgt über eine mit den Keilen verbundene Spindel und einen motorischen Antrieb.

Ein ebenfalls vertikales Anheben bzw. Absenken erfährt ein Kalibriergewicht durch eine in der EP 0 955 530 A1 beschriebene Vorrichtung. Das Gewicht ruht auf einer Auflage, welche durch einen Transfermechanismus mit einem Steuerscheiben-Hebesystem beziehungsweise Exzenter bewegt wird.

In EP 0 020 030 A1 wird eine Kalibriergewichtsanordnung mit zwei voneinander unabhängigen Kalibriergewichten offenbart, wobei diese mit derselben, mit dem Lastaufnahmebereich der Kraftmesszelle verbundenen Kalibriergewichtsaufnahme gekoppelt beziehungsweise von dieser entkoppelt werden. Die gestufte Kalibration dient dazu, die Kalibriervorrichtung selbst zu überprüfen. Ferner kann mindestens eines der Kalibriergewichte auch der Erweiterung des Wägebereichs dienen, wie dies in DE 33 30 988 A1 offenbart ist.

Angetrieben werden die erwähnten Hebeelemente im Allgemeinen durch kleine Servomotoren. Nachteilig an der Verwendung von Servomotoren ist, dass ein solcher vergleichsweise viel Platz in der Kraftmesszelle der Waage benötigt, wodurch sowohl die Kraftmesszelle als auch die Waage selbst unnötig vergrössert wird. Eine Verbesserung der Kalibriergewichtsanordnung erfordert somit insbesondere eine Optimierung und Miniaturisierung des Antriebs des Transfermechanismus.

In der US 2004/068985 A1 wird ein Aktuator offenbart, dessen oszillierende Bewegung mittels zweier Drähte aus einer Formgedächtnismetall- Legierung bewirkt wird. Je nach Rotationsrichtung der Antriebswelle wird der entsprechende Draht mit elektrischer Energie beaufschlagt wodurch er sich zusammenzieht und dadurch auf eine, auf der Antriebswelle montierten Scheibe, einwirkt.

Gerade bei hochempfindlichen elektronischen Waagen wird das Wägeergebnis auch durch elektrostatische Aufladung und Wechselwirkungen beeinflusst und sogar verändert. Die für den Antrieb der Transfermechanismen verwendeten Servomotoren enthalten elektrisch nicht leitende Getriebeteile, welche im Betrieb über Reibung elektrostatische Felder erzeugen. Die entstehenden elektrostatischen Felder reichen aus, um das Wägeergebnis, insbesondere von hochempfindlichen Waagen zu beeinflussen.

Wiederum in EP 0 020 030 A1 werden als Antrieb Hubmagnete verwendet, welche während des gesamten Kalibrier- Messvorganges mit Strom beaufschlagt sind. Hubmagnete haben somit wie die meisten kleinen, kostengünstigen Antriebe den Nachteil, dass sie keine selbsthemmenden Eigenschaften besitzen. Solche Antriebe sind zum Betrieb in einer Kalibriergewichtsanordnung für präzise Analysewaagen ungeeignet, da die erzeugten Magnetfelder und die durch die lange Bestromungszeit in der Spule erzeugte Wärme den Referenzwert und das Wägeergebnis stark beeinflussen. Mit Selbsthemmung eines Antriebs wird sein Vermögen bezeichnet, im Stillstand den auf den Antrieb einwirkenden Kräften zu widerstehen, so dass sich der Antrieb nicht infolge dieser Kräfte bewegt.

Aufgabe der vorliegenden Erfindung ist es daher, eine Kalibriergewichtsanordnung zu schaffen, die klein, kompakt und flexibel einsetzbar ist und deren Antrieb weder den zu ermittelnden Referenzwert noch das Wägeergebnis beeinflusst oder nur einen möglichst geringen Einfluss ausübt.

Gelöst wird diese Aufgabe mit den Merkmalen des Anspruchs 1. Ein gravimetrisches Messgerät, insbesondere eine Waage, beinhaltet nebst einer Kraftmesszelle mit einem feststehenden Bereich und einem Lastaufnahmebereich auch eine Kalibriergewichtsanordnung, wobei mindestens ein Kalibriergewicht mit dem Lastaufnahmebereich koppelbar ist. Sofern die Kraftmesszelle eine Kraftübertragungsvorrichtung zur Untersetzung der Kraft aufweist, ist die Einkopplung eines Kalibriergewichts an irgendeiner Stelle in das Hebelsystem der Kraftübertragungsvorrichtung als ein Koppeln des Kalibriergewichts mit dem Lastaufnahmebereich zu verstehen. Die Kalibriergewichtsanordnung weist mindestens ein Kalibriergewicht, einen Transfermechanismus welcher mindestens ein Rückstellelement, ein Hebesystem und mindestens ein Positionierelement beinhaltet und einen Antrieb auf, um das Kalibriergewicht während einer Bewegungsphase von einer Ruheposition in eine Kalibrierposition beziehungsweise von der Kalibrierposition in die Ruheposition zu transferieren. Das mindestens eine Positionierelement ist als polystabiles Positionierelement ausgestaltet, dessen erster stabiler Zustand die Kalibrierposition, und dessen zweiter stabiler Zustand die Ruheposition des Transfermechanismus definieren. Selbstverständlich kann das polystabile Positionierelement zwischen der Kalibrierposition und der Ruheposition noch weitere stabile Positionen aufweisen, um beispielsweise mehrere, voneinander unabhängige Kalibriergewichte mit dem Lastaufnahmebereich zu koppeln, wie dies in EP 0 020 030 A1 offenbart ist. Dabei hängt die Anzahl stabiler Positionen des polystabilen Positionierelementes vom Kalibrierungsablauf ab. Ein Kalibrierungsablauf wie er beispielsweise in EP 0 020 030 A1 vorgeschlagen wird, erfordert ein tristabiles Positionierelement, bei dessen dritter stabiler Position das erste der beiden Kalibriergewichte aufgelegt ist und bei dessen Kalibrierposition das zweite Kalibriergewicht zusammen mit dem ersten Kalibriergewicht mit dem Lastaufnahmebereich in Anlage ist.

Meistens wird aber nur ein Kalibriergewicht verwendet, wozu ein bistabiles Positionierelement vollkommen ausreicht, welches lediglich die beiden Positionen Kalibrierposition und Ruheposition definiert.

Durch die Ausgestaltung des Transfermechanismus mit einem polystabilen Positionierelement kann als Antrieb ein kleiner, kostengünstiger Aktuator ohne Selbsthemmung eingesetzt werden, wobei dem Aktuator nur während der Bewegungsphasen des Transfermechanismus Energie zugeführt werden muss. Das Halten des Transfermechanismus in der Kalibrierposition, in der Ruheposition und gegebenenfalls in weiteren stabilen Positionen erfolgt durch das Zusammenwirken von Rückstellelement und Positionierelement, womit keine dem Rückstellelement entgegenwirkende Kraft durch den Aktuator erzeugt werden muss.

Aufgrund der Ausgestaltung des polystabilen Positionierelements und der Wirkung des Rückstellelements muss der Aktuator nur dann mit Energie beaufschlagt werden, wenn sich der Führungsbolzen in bestimmten Teilabschnitten der Führungsnut befindet. Dies kann beispielsweise in Form von mehreren Energieimpulsen in diesen Teilabschnitten geschehen, aber auch nur jeweils zu Beginn jeder Bewegungsphase mit jeweils nur einem Energieimpuls.

Vorzugsweise wird ein elektrischer Aktuator verwendet und dem Aktuator Energie in Form von Stromimpulsen zugeführt. Der Aktuator muss, wenn aktiviert, in der Lage sein, die Rückstellkraft des Rückstellelementes zu überwinden.

Im Wissenschaftsmagazin der Ruhr- Universität Bochum, RUBIN 2/01, 11. Jahrgang, Wintersemester 2001 wurde unter dem Titel " Keep it simple: Kosmak und iLiros" ein Artikel veröffentlicht, der einen kompakten Stellantrieb offenbart, welcher mittels eines Formgedächtnislegierungs- Drahtes angetrieben wird. Die Antriebswelle des Antriebs dreht zwischen zwei Winkelstellungen hin und zurück. Die beiden Winkelstellungen werden dabei ebenfalls durch ein bistabiles Positionierelement beziehungsweise ein mechanisches Flip- Flop definiert. Ein solcher Formgedächtnislegierungs- Draht oder durch die englische Bezeichnung "shape memory alloy" kurz als SMA- Draht bezeichnet, benötigt nur wenig Bauraum, ist nicht selbsthemmend und bietet sich deshalb auch als Antrieb für die vorliegende Erfindung an.

Die Rückstellkraft des Rückstellelements muss grösser sein, als die Gewichtskraft des Kalibriergewichts und die in Lastrichtung wirkenden Kräfte des Transfermechanismus sowie dessen Reibungswiderstände. Die Rückstellkraft des Rückstellelements hält den Transfermechanismus in der durch das Positionierelement definierten Kalibrierposition beziehungsweise Ruheposition.

Dies geschieht beispielsweise dadurch, dass ein bistabiles Positionierelement beziehungsweise mechanisches Flip- Flop mindestens ein Führungsstück mit einer Führungsnut in Herzform, ähnlich einer Kardioide aufweist, deren Herzformspitze beispielsweise der Ruheposition und deren Herzformkuhle der Kalibrierposition entspricht. Mindestens ein mit dem feststehenden Bereich verbundener Führungsbolzen greift in diese Führungsnut ein. Die Federkraft des Rückstellelements drückt den Führungsbolzen dabei in Richtung Herzformspitze beziehungsweise in Richtung Herzformkuhle. Die Herzform ist eine gebräuchliche Ausgestaltung einer solchen Führungsnut. Selbstverständlich können aber auch andere Führungsnutformen verwendet werden, die mindestens zwei stabile Zustände des Positionierelementes ermöglichen. Die Ausgestaltung der einzelnen Kurvenabschnitte richtet sich im Wesentlichen nach den Ausgestaltungen der entsprechenden Transfermechanismen und deren Bewegungsablauf. Statt einer Führungsnut können auch Formstücke verwendet werden, deren Aussen- oder Innenkontur eine der Führungsnut entsprechende Wirkungsweise aufweisen. Dasselbe gilt auch für den Führungsbolzen, dessen Ausgestaltung sich nach den anderen Teilen des Positionierelementes richtet.

Grundsätzlich können eine Vielzahl von polystabilen Elementen zur Positionierung verwendet werden, so zum Beispiel mechanische Flip- Flops mittels Federn, mittels Dauermagneten sowie pneumatische und hydraulische Lösungen.

Damit der Führungsbolzen in der Führungsnut eines polystabilen Positionierelements auch jeweils den richtigen Umlaufsinn einhält und nicht wieder denselben Kurvenabschnitt zurückläuft, müssen Mittel vorgesehen werden, die ein Rücklaufen verhindern. Solche Mittel können federnde Zungen innerhalb der Führungsnut sein die, einer Weichenzunge gleich, Kurvenabschnitte sperren. Einfacher ist die Verwendung einer federnden Verbindung wie einer Dünnstellenbiegefeder oder eines Biegegelagers, das zwischen dem Hebesystem und dem polystabilen Positionierelement angeordnet ist, wobei die Dünnstellenbiegefeder oder das Biegegelager dann in biegespannungsneutralem Zustand ist, wenn sich der Führungsbolzen zwischen der Kalibrierposition und der Ruheposition befindet. Dadurch wird in den stabilen Positionen der Führungsbolzen gegenüber dem Führungsstück in eine vorgegebene Richtung vorgespannt und kann durch die Geometrie der Führungsnut und dem aus den Kraftvektoren des Rückstellelementes und der Dünnstellenbiegefeder resultierenden Kraftvektor entsprechend, nur in einer Richtung weiterlaufen. Generell kann selbstverständlich auch der Führungsbolzen mit dem Hebesystem und das Führungsstück mit dem feststehenden Bereich verbundenen sein.

Das polystabile Positionierelement kann aber auch eine Mechanik umfassen, wie sie beispielsweise in Kugelschreibern verwendet wird und beispielsweise in DE 12 69 012 B1 beschrieben ist. Dabei weist das Positionierelement mindestens ein Führungsstück in Form einer mit dem feststehenden Bereich der Kraftmesszelle verbundenen, drehbar gelagerten Walze oder Hülse auf, wobei deren Zylindermantel mindestens eine Führungsnut mit den zwei Positionen Kalibrierposition und Ruheposition beinhaltet, in welche mindestens ein mit dem Hebesystem verbundener Führungsbolzen eingreift. Selbstverständlich kann auch das Führungsstück in Form einer drehbar gelagerten Walze oder Hülse mit dem Hebesystem, und der Führungsbolzen mit dem feststehenden Bereich verbundenen sein.

Vorzugsweise weist das Hebesystem mindestens ein Kniegelenk auf. Das Rückstellelement und das Hebesystem sind so aufeinander abgestimmt, dass das Kniegelenk bereits bei Einwirkung einer geringen Zugkraft auf das Hebesystem einknickt, wodurch das Kalibriergewicht in Kraftkontakt mit der Kraftmesszelle gebracht wird. Die Kraft des Rückstellelements wiederum ist so ausgelegt, dass sie bei nachlassender Krafteinwirkung auf das Hebesystem das Kniegelenk streckt.

In Abhängigkeit der Ausgestaltung des Transfermechanismus und insbesondere des Hebesystems können unterschiedliche Arten von Rückstellelementen eingesetzt werden. Dazu gehören unter anderem verschiedene Arten von Federn oder andere Bauteile mit vergleichbarer Wirkung. Die Rückstellelemente sind in der Ruheposition der Kalibriergewichtsanordnung vorzugsweise leicht vorgespannt. Es können verschiedene Arten von Federn wie beispielsweise Schenkelfedern, Schraubendruckfedern, Zugfedern, Torsionsstabfedern oder Blattfedern verwendet werden. Besonders vorteilhaft bei der Verwendung einer Schenkelfeder ist, dass die Rückstellkraft der Feder direkt auf das Kniegelenk einwirkt und die Feder selbst aufgrund der Befestigungsart nicht vibriert oder anderweitig die Position verändern kann.

Vorzugsweise werden zwei parallel angeordnete Kniegelenke verwendet, deren Verbindungsachsen beide Kniegelenke entsprechend verbinden, so dass sich beide Kniegelenke simultan bewegen und sich nicht gegenseitig hemmen oder gar verkeilen. Ein oder mehrere Kniegelenke wiederum können mehrere Formteilen umfassen, welche direkt oder über geeignete Verbindungsmittel miteinander verbunden sind, oder können auch einstückig ausgeformt sein. Das Hebesystem, das Rückstellelement und mindestens Teile des Positionierelements können ebenfalls einstückig miteinander verbunden sein. Bei entsprechender Ausgestaltung kann das Hebesystem auch nur ein einzelnes Kniegelenk umfassen.

Die Rückstellkraft des Rückstellelements ist auf den entsprechenden Transfermechanismus abgestimmt, um einen optimalen Ablauf des Kalibriervorgangs zu gewährleisten, also des In-Kontaktbringens und Lösens des Kontakts zwischen dem Kalibriergewicht und der Kraftübertragungsvorrichtung beziehungsweise dem Lastaufnahmebereich.

Als Aktuator ohne Selbsthemmung für eine Kalibriergewichtsanordnung mit einem als Kniegelenk ausgestalteten Hebesystem bieten sich verschiedene Antriebe und insbesondere lineare Antriebe an, wie beispielsweise Spindel-Antriebe, Riemen-Antriebe, magnetische Antriebe aber auch Linearmotoren. Besonders klein und kompakt sind Antriebe, die zumindest teilweise aus einer Formgedächtnislegierung gestaltet sind. Selbst eine manuelle Betätigung des Transfermechanismus ist denkbar, wobei selbstverständlich Übertragungsmittel vorgesehen sein müssen um den manuell aufgebrachten Energieimpuls auf den Transfermechanismus zu übertragen. Der Aktuator kann den Transfermechanismus auch beispielsweise durch Umsetzung der Kraft über mindestens eine Rolle oder einen Hebel auslösen.

Die Verwendung eines polystabilen Positionierelementes birgt jedoch die Problematik in sich, dass bei jeder Inbetriebnahme des gravimetrischen Instruments die aktuelle Position der Kalibriergewichtsanordnung nicht bekannt ist. Diese kann infolge von Einwirkungen aus der Umgebung wie beispielsweise Schläge durchaus ändern, selbst wenn das gravimetrische Messgerät ausgeschaltet ist. Solches kann nur verhindert werden, wenn die Mechanik mit teuren Verriegelungsmassnahmen versehen wird. Einfacher und kostengünstiger ist es, wenn bei jeder Inbetriebnahme des gravimetrischen Messgeräts oder auch periodisch, der aktuelle Zustand der Kalibriergewichtsanordnung geprüft und ein definierter Zustand, beispielsweise die Ruheposition, angefahren wird. Zur Überprüfung und Definition des Zustandes der Kalibriergewichtsanordnung mit einem polystabilen Positionierelement kann ein Verfahren nach einen der Ansprüche 17 und 18 angewendet werden.

Zuerst wird ein Referenzsignalwert der Kraftmesszelle ermittelt und dieser Referenzsignalwert mit der Positionsnummer eins abgespeichert. Dann wird jede weitere stabile Position des polystabilen Positionierelementes durchlaufen, bis wieder die Position des Referenzsignalwertes erreicht ist, wobei jeweils ein Wägesignalwert der Kraftmesszelle in jeder stabilen Position ermittelt, und dieser in der durchlaufenen Reihenfolge mit Positionsnummern abgespeichert wird. Die Wägesignalwerte und der Referenzsignalwert werden nun miteinander verglichen, wobei der kleinste Signalwert und dessen Positionsdifferenz zur Position des Referenzwertes ermittelt werden. Ausgehend von der Position des Referenzwertes werden dem Aktuator nun gemäss der ermittelten Positionsdifferenz so viele Energieimpulse zugeführt, bis die Position mit dem kleinsten Signalwert erreicht ist, was der Ruheposition entspricht.

Sofern in der Kalibriergewichtsanordnung ein bistabiles Positionierelement verwendet wird, vereinfacht sich das Verfahren wie folgt:

Wiederum wird zuerst ein Referenzsignalwert der Kraftmesszelle ermittelt und abgespeichert. Danach wird dem Aktuator ein Energieimpuls zugeführt und ein Wägesignalwert der Kraftmesszelle ermittelt, der Referenzwert mit dem Wägesignalwert verglichen und dem Aktuator ein weiterer Energieimpuls zugeführt, sofern der Wägesignalwert grösser ist als der Referenzsignalwert.

Sofern ein Referenzwert bereits ab Werk abgespeichert ist, beispielsweise der Wägesignalwert bei sich in Ruheposition befindender Kalibriergewichtsanordnung und unbelastetem Lastaufnahmebereich, erübrigt sich natürlich die Ermittlung eines Referenzwertes und dem Aktuator werden solange Energieimpulse zugeführt, bis der Wägesignalwert der Kraftmesszelle dem Referenzwert entspricht, höchstens aber nur so viele, wie stabile Positionen vorhanden sind.

Verschiedene Ausführungsformen der Kalibriergewichtsanordnung werden im Folgenden in den Figuren dargestellt. Die Figuren zeigen:

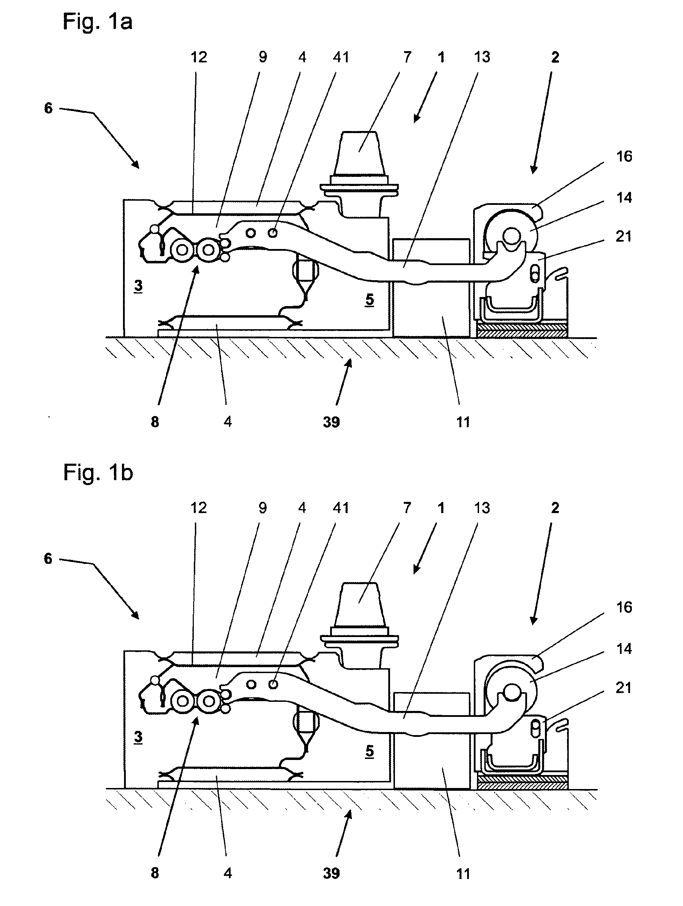

- Fig. 1: eine schematische, vereinfachte Seitenansicht einer Kraftmesszelle einer elektronischen Waage mit verlängertem Kalibriergewichtsarm und einer neben der Kraftmesszelle angeordneten Kalibriergewichtsanordnung mit einem Kalibriergewicht, wobei in Figur 1a das Kalibriergewicht in seiner Ruheposition und in Figur 1b das Kalibriergewicht in seiner Kalibrierposition dargestellt ist;

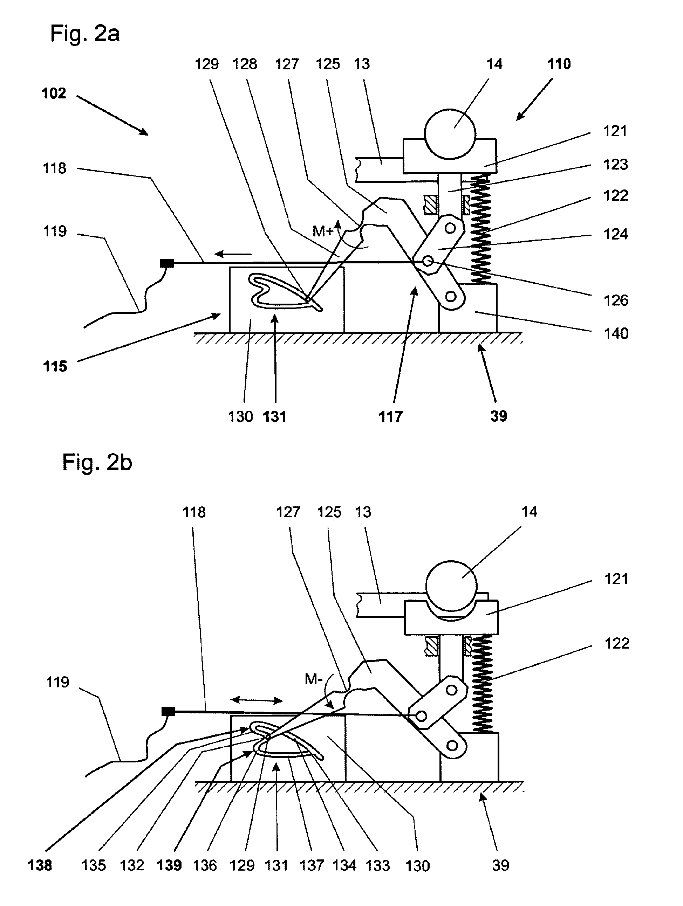

- Fig. 2: eine schematische, vereinfachte Seitenansicht einer Kalibriergewichtsanordnung mit einem Kniegelenk, einem als Draht ausgestalteten Aktuator aus einer Formgedächtnislegierung und einem polystabilen Positionierelement, wobei in Figur 2a die Kalibriergewichtsanordnung in Ruheposition, und in Figur 2b die Kalibriergewichtsanordnung in Kalibrierposition dargestellt ist;

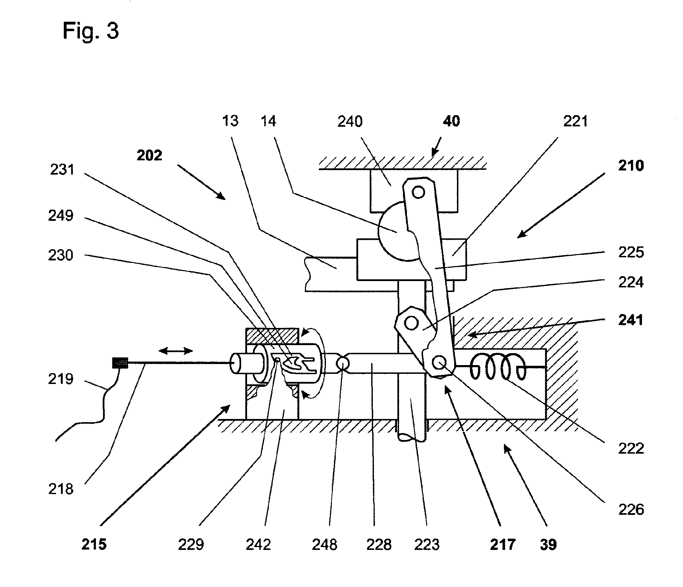

- Fig. 3: eine schematische, vereinfachte Seitenansicht einer Kalibriergewichtsanordnung mit einem Kniegelenk, einem als Draht ausgestalteten Aktuator aus einer Formgedächtnislegierung und einem polystabilen Positionierelement in Form einer drehbar gelagerten Walze, wobei das Kniegelenk zur Erreichung einer geringeren Bauhöhe einen spitzen Winkel zwischen den Kniegelenklaschen aufweist;

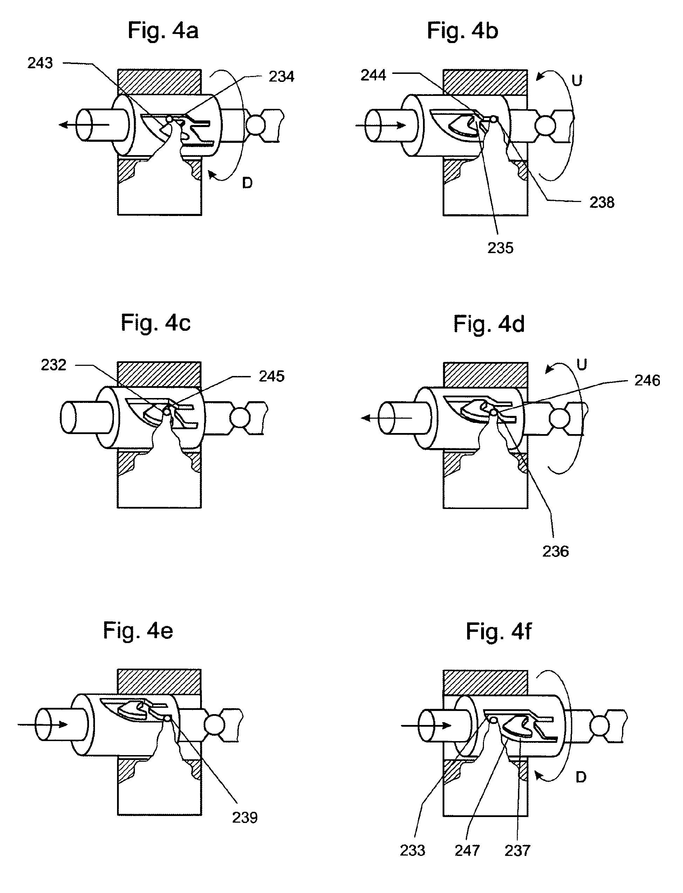

- Fig. 4: das polystabile Positionierelement in Form einer drehbar gelagerten Walze von Figur 3, wobei die Figuren 4a bis 4d verschiedene Positionen des Positionierelements darstellen;

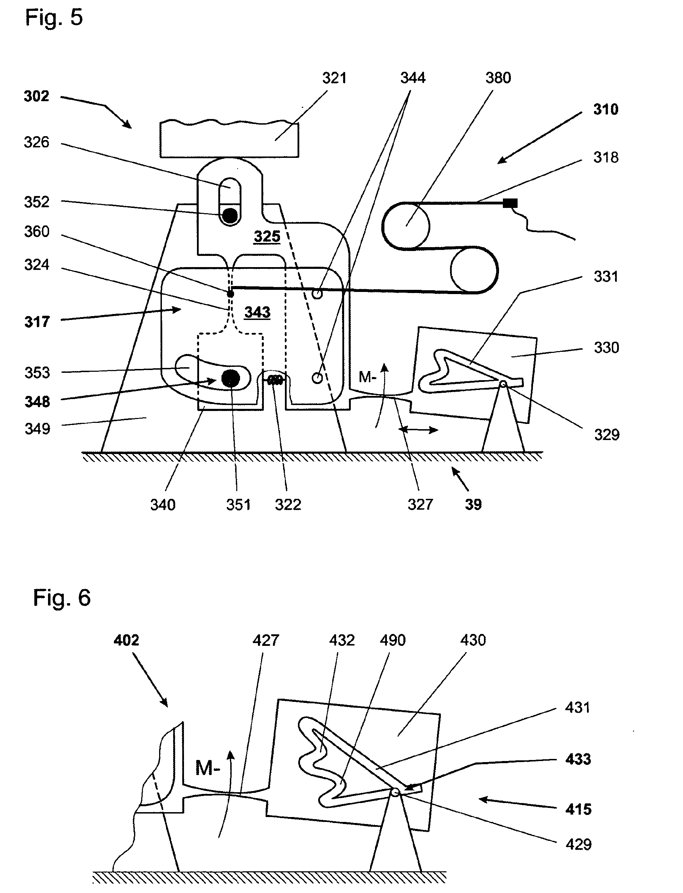

- Fig. 5: eine Seitenansicht eines einstückig ausgeformten, in der Ruheposition dargestellten Transfermechanismus mit einem integrierten Überlastschutz und einem bistabilen Positionierelement;
- Fig. 6: einen Ausschnitt einer Seitenansicht eines einstückig ausgeformten, in der Ruheposition dargestellten Transfermechanismus analog der Figur 5 mit einem integrierten Überlastschutz, wobei der Ausschnitt anstelle des bistabilen Positionierelementes ein tristabiles Positionierelement zeigt.

Zur Veranschaulichung der bekannten Anordnung einer Kraftmesszelle 6 und einer Kalibriergewichtsanordnung 2 in einem gravimetrischen Messgerät 1 beziehungsweise in einer elektronischen Waage sind diese in der Figur 1 in Seitenansicht dargestellt. Figur 1a zeigt eine Kalibriergewichtsanordnung 2 in ihrer Ruheposition und Figur 1b eine Kalibriergewichtsanordnung 2 in ihrer Kalibrierposition. Die Kraftmesszelle 6 weist eine Parallelführung mit einem feststehenden Bereich 3 und einem über zwei Parallelogrammlenker 4 an diesen angelenkten Lastaufnahmebereich 5 auf. Der feststehende Bereich 3 und die Kalibriergewichtsanordnung 2 sind an einer Basis 39, beispielsweise dem Gehäuseboden des gravimetrischen Messgeräts 1, festgelegt. Der Lastaufnahmebereich 5 ist über den Konus 7 mit einer hier nicht gezeigten Waagschale verbunden und durch Belastung derselben gegenüber dem feststehenden Bereich 3 vertikal in Richtung der Schwerkraft auslenkbar. Eine Auslenkung des Lastaufnahmebereichs 5 in Richtung der Schwerkraft bewirkt eine Kraftübertragung auf ein Hebelwerk 8, welches die Kraft untersetzt und an ein hier nicht detailliert dargestelltes, meist elektromagnetisches Kraftkompensationssystem 11 weiterleitet.

Die Parallelführung 3, 4, 5 und das Hebelwerk 8 der Kraftmesszelle 6 sind in dem im wesentlichen quaderförmigen Materialblock derart ausgebildet, dass dessen Materialbereiche durch materialfreie Bereiche in Form von dünnen, den Materialblock senkrecht zu seiner ausgedehnten Fläche durchsetzende Schnittlinien 12 voneinander getrennt sind. Die Schnittlinien 12 werden bevorzugt mittels Funkenerosion erzeugt.

Der Hebel 9 des Hebelwerks 8 ist mit Durchgangsbohrungen versehen, an denen mittels geeigneter Befestigungsmittel 41 ein Kalibriergewichtsarm 13 als Verlängerung derart angebracht ist, dass auch mittels eines Kalibriergewichts 14 geringer Masse eine Volllastkalibrierung durchgeführt werden kann.

Wie in Figur 1a zu erkennen ist, ruht ein Kalibriergewicht 14 während eines Wiegevorgangs auf einer Kalibriergewichtsauflage 21 und wird gegen die als Parkbügel 16 ausgestalteten Seitenteile der Kalibriergewichtsanordnung 2 gepresst. Aus dieser Darstellung ist das vordere Seitenteil der Kalibriergewichtsanordnung 2 entfernt worden, so dass die Kalibriergewichtsauflage 21 und vor allem die Kontaktstelle zwischen dem Kalibriergewicht 14 und dem Kalibriergewichtsarm 13 zu sehen ist. Dasselbe gilt auch für Figur 1 b.

Das Kalibriergewicht 14 ist in Figur 1a vollständig vom Hebelwerk der Kraftmesszelle 6 entkoppelt. Für eine Kalibrierung wird das Kalibriergewicht 14 mittels eines Transfermechanismus, welcher hier durch die Kalibriergewichtsauflage 21 verdeckt wird, auf den Kalibriergewichtsarm 13 abgesenkt und dadurch in Kraftkontakt mit dem Hebelwerk 8 gebracht, wie es in Figur 1b dargestellt ist. Das Kalibriergewicht 14 ruht in der Kalibrierposition somit vollständig auf dem Kalibriergewichtsarm 13. Der Transfermechanismus weist ein Hebesystem und einen Antrieb auf. Der Antrieb wird im Allgemeinen neben der Kalibriergewichtsanordnung 2 angeordnet, bezogen auf die Darstellung vor oder hinter der Zeichnungsebene.

Die schematische, vereinfachte Seitenansicht einer Kalibriergewichtsanordnung 102 zeigt Figur 2, wobei in Figur 2a die Kalibriergewichtsanordnung 102 in Ruheposition und in Figur 2b die Kalibriergewichtsanordnung 102 in Kalibrierposition dargestellt ist. Die Kalibriergewichtsanordnung 102 ist mit dem feststehenden Bereich der nicht dargestellten Wägezelle über eine Basis 39 verbunden und beinhaltet das Kalibriergewicht 14, ein Hebesystem 110, einen Aktuator 118, 119 und ein polystabiles Positionierelement 115.

Das Hebesystem 110 umfasst eine orthogonal zur Basis 39 linear geführte Führungsstange 123, einen Gelenkarm 125, dessen eines Ende drehbar gelagert mit einem, an der Basis 39 festgelegten Lagerblock 140 verbunden ist und eine Verbindungslasche 124, deren erstes Ende mit dem der Basis 39 zugewandten Ende der Führungsstange 123 gelenkig verbunden ist und deren zweites Ende mittels eines Gelenklagers 126 in der Mitte des Gelenkarms 125 gelenkig angreift. An dem aus dem Gelenkarm 125, dem Gelenklager 126 und der Verbindungslasche 124 gebildeten Kniegelenk 117 greift im Bereich des Gelenklagers 126 ein beheizbarer als Draht ausgestalteter Aktuator ohne Selbsthemmung 118,119 aus einer Formgedächtnislegierung als Teil des Antriebs an. Formgedächtnislegierungen zeichnen sich dadurch aus, dass sie beim Überschreiten einer Phasenübergangstemperatur ihre physikalischen Eigenschaften aufgrund eines Festphasenübergangs ändern. Formgedächtnislegierungen sind bei Temperaturen unterhalb ihrer Phasenübergangstemperatur formbarer als bei Temperaturen oberhalb der Phasenübergangstemperatur. Eine Temperaturerhöhung über die Phasenübergangstemperatur hinaus bewirkt im Falle der Ausgestaltung als Draht, dass sich dieser verkürzt und somit eine Kraft ausüben kann, welche beispielsweise als Zugkraft auf das hier dargestellte Kniegelenk 117 einwirkt und so dessen Bewegung auslöst. Die Temperaturerhöhung kann in einfacher Weise durch ein Beaufschlagen des Drahts 118 mit Strom erfolgen, hier durch die elektrische Zuleitung 119 an einem Ende des Drahts angedeutet. Geerdet wird der Draht 118 am entgegen gesetzten Ende, welches hier nicht zu sehen ist.

Sobald sich der Draht verkürzt, erfolgt eine Verschiebung des Gelenklagers 126 und dadurch ein Einknicken des Kniegelenks 117, was in einer linearen Verschiebung der Führungsstange 123 in einer Richtung orthogonal zur Basis 39 resultiert. Da an dem der Basis 39 abgewandten Ende der Führungsstange 123 die Kalibriergewichtsauflage 121 angebracht ist, erfährt diese eine Verschiebung in Richtung der Basis 39. Das auf der Kalibriergewichtsauflage 121 aufliegende Kalibriergewicht 14 wird auf diese Weise bei beispielsweise halber Hubstrecke des Hebesystems 110 auf den Kalibriergewichtsarm 13 aufgelegt und vom Transfermechanismus vollständig entkoppelt. Um diesen Bewegungsverlauf rückgängig zu machen, beziehungsweise das Kalibriergewicht 14 wieder vom Kalibriergewichtsarm 13 abzuheben, muss ein Rückstellelement 122 in Form einer Schraubendruckfeder zwischen der Basis 39 und der Kalibriergewichtsauflage 121 angeordnet sein. Sobald die Zugkraft des Aktuators 118 nachlässt, "streckt" sich das Kniegelenk 117 infolge der Rückstellkraft des Rückstellelements 122 wieder und das Kalibriergewicht 14 wird durch das Hebesystem 110 vom Kalibriergewichtsarm 13 abgehoben und entkoppelt. Weist der Aktuator 118 einen SMA-Draht auf, so bewirkt das Rückstellelement 122 zusätzlich auch, dass der nach der Kalibrierung erkaltende Draht wieder zu seiner ursprünglichen Länge gedehnt wird, wozu eine Kraft nötig ist.

Damit dem Aktuator 118 während des Kalibriervorgangs nicht andauernd Energie zugeführt werden muss, um den Transfermechanismus in der Kalibrierposition zu halten, ist ein Führungsstück 130 welches Teil des polystabilen Positionierelements 115 ist, an der Basis 39 festgelegt. Das Führungsstück 130 weist eine Führungsnut 131 auf, deren Form im Wesentlichen derjenigen eines Herzens entspricht. Dieses polystabile Positionierelement 115 kann somit auch als bistabiles Positionierelement 115 bezeichnet werden. Der bewegliche Teil des Positionierelements 115, einen Führungsbolzen 129 und eine Führungskoppel 128 umfassend, ist über eine Dünnstellenbiegefeder 127 mit dem, dem Lagerblock 140 abgewandten Ende des Gelenkarms 125 verbunden. Die in Figur 2a dargestellte Position entspricht der Ruheposition. Die Dünnstellenbiegefeder 127 ist vorgespannt, übt ein Moment M+ im Uhrzeigersinn auf die Führungskoppel 128 aus und drückt damit den Führungsbolzen 129 gegen die der Basis 39 abgewandten Flanke der Führungsnut 131. Form und Lage der Führungsnut 131 ist so auf den Bewegungsablauf des Gelenkarms 125 abgestimmt, dass der Führungsbolzen 129 durch den resultierenden Kraftvektor aus den Momenten der Federelemente 127, 122 stets im Gegenuhrzeigersinn die Führungsnut 131 durchläuft.

Der nachfolgend beschriebene Bewegungsablauf soll dies noch ausführlicher darlegen. Zur besseren Übersicht sind die Teilabschnitte der Führungsnut 131 nur in Figur 2b bezeichnet. Die Führungsnut 131 weist eine Herzspitze 133 welche die Ruheposition, und eine Herzkuhle 132 welche die Kalibrierposition des Transfermechanismus definiert, auf. Der der Basis 39 abgewandte Nutabschnitt der Führungsnut 131 wird als erster Teilabschnitt 134, der zwischen diesem Teilabschnitt 134 und der Herzkuhle 132 angeordnete Nutabschnitt wird als zweiter Teilabschnitt 135, der der Basis 39 zugewandte Nutabschnitt wird als vierter Teilabschnitt 137 und der zwischen diesem Teilabschnitt 137 und der Herzkuhle 132 angeordnete Nutabschnitt wird als dritter Teilabschnitt 136 bezeichnet.

Sobald das Kniegelenk 117 durch die Kraft des Aktuators 118 einknickt, gleitet der Führungsbolzen 129 ausgehend von der in Figur 2a dargestellten Ruheposition durch den ersten Teilabschnitt 134, da das von der Dünnstellenbiegefeder 127 im Uhrzeigersinn erzeugte Moment M+ beziehungsweise der dadurch auf den Führungsbolzen 129 wirkende Kraftvektor den Führungsbolzen 129 gegen die der Basis 39 abgewandte Flanke des ersten Teilabschnitts 134 drückt. In diesem Teilabschnitt 134, zwischen der Herzspitze 133 und der Herzkuhle 132 erreicht der Führungsbolzen 129 die Stelle, an der die Dünnstellenbiegefeder 127 einen biegespannungsneutralen Zustand erreicht. Je weiter der Führungsbolzen 129 in Richtung zweiter Teilabschnitt 135 beziehungsweise Herzkuhle 132 bewegt wird, desto stärker wird die Dünnstellenbiegefeder 127 wieder gespannt, übt aber nun ein Drehmoment M- im Gegenuhrzeigersinn aus. Sobald der zweite Teilabschnitt 135 erreicht wird, folgt der Führungsbolzen 129 aufgrund des von der Dünnstellenbiegefeder 127 verursachten Kraftvektors in Richtung Basis 39 dem zweiten Teilabschnitt 135. Die Energiezufuhr zum Aktuator 118 wird bei erreichen eines ersten Umkehrpunktes 138, welcher ungefähr in der Mitte des zweiten Teilabschnittes 135 angeordnet ist, unterbrochen und der Führungsbolzen 129 gleitet infolge der Federkraft des Rückstellelementes 122 in die Herzkuhle 132. Der Gelenkarm 125 wird dadurch in einer Position gehalten wie es in Figur 2b dargestellt ist, was der Kalibrierposition entspricht. In der Herzkuhle 132 wirkt immer noch ein Moment M- des Dünnstellenbiegelagers 127 so dass der Führungsbolzen 129 gegen den dritten Teilabschnitt 136 hin gedrückt wird und durch diesen gleitet, sobald der Aktuator 118 wieder mit Energie beaufschlagt wird. Die Energiezufuhr wird unterbrochen, sobald der zweite Umkehrpunkt 139 vom Führungsbolzen erreicht wird. Das Rückstellelement 122 zieht nun den Führungsbolzen 129 durch die zweite Hälfte des dritten Teilabschnitts 136 und den vierten Teilabschnitt 137 in Richtung Herzspitze 133. Im Teilabschnitt 137 findet aufgrund der geometrischen Verhältnisse wieder eine Biegemoment- Umkehr in der Dünnstellenbiegefeder 127 statt, so dass bei Erreichen der Herzspitze 133 der Kraftvektor auf den Führungsbolzen 129 wieder in die von der Basis 39 abgewandte Richtung wirkt. Der Gelenkarm 125 und damit das Kalibriergewicht 14 befinden sich wie in Figur 2a dargestellt, wieder in der Ausgangsposition, was der Ruheposition entspricht.

Die in Figur 3 dargestellte Ausführung einer Kalibriergewichtsankopplung 202 weist ein Hebesystem 210 auf, das im Wesentlichen dieselben Funktionselemente wie das Hebesystem 110 aus Figur 2 aufweist. Zur Erreichung einer geringeren Bauhöhe ist der Lagerblock 240 jedoch oberhalb des Kalibriergewichts an einem Träger 40 festgelegt, welcher mit der Basis 39 starr verbunden ist und gleichzeitig als Parkbügel zur Arretierung des Kalibriergewichts 14 dient. Dadurch weist das Kniegelenk 217 einen spitzen Winkel zwischen der Verbindungslasche 224 und dem Gelenkarm 225 auf. Die Führungsstange 223 wird an der Basis 39 linear geführt, die mit der Führungsstange 223 verbundene Kalibriergewichtsauflage 221 ist analog zur Kalibriergewichtsauflage 121 in Figur 2 ausgestaltet, um das Kalibriergewicht 14 bei Betätigung des Hebesystems an den Kalibriergewichtsarm 13 zu übergeben beziehungsweise wieder vom Kalibriergewichtsarm 13 zu übernehmen. Das Rückstellelement 222 in Form einer Zugfeder wirkt direkt auf das Gelenklager 226 und somit direkt gegen die Zugkraft des Aktuators 218. Das Rückstellelement 222 zieht in Ruheposition zudem das Kniegelenk 217 gegen einen mit der Basis 39 fest verbundenen Anschlag 241. In dieser Position ist die Verbindungslasche 224 gegenüber Gelenkarm 225 so angeordnet, dass durch die Stellung des Kniegelenks 217 auf das Hebesystem 210 einwirkende Überlasten, verursacht beispielsweise durch Schläge von Aussen, direkt über das Kniegelenk 217 vom Anschlag 241 aufgenommen werden. Dadurch wird der Aktuator 218 nicht durch Überlasten zerstört. Zwischen dem Aktuator 218 und dem Gelenklager 226 ist ein polystabiles Positionierelement 215, auch hier in bistabiles Ausführung, in Serie zum Aktuator 218 angeordnet. Zwecks Verdeutlichung der Funktionsweise wird dieser Teil in räumlicher Darstellung gezeigt. Die serielle Anordnung ist nicht zwingend; es ist auch eine zum Aktuator 218 parallele Anordnung möglich. Das Führungsstück 230 in Form einer auf einer Verbindungskoppel 228 drehbar gelagerten Walze, weist eine Führungsnut 231 auf die eine herzförmige, erhabene Mittekontur 249 umgibt, wobei das Niveau der herzförmigen Fläche der Mittekontur 249 der Zylinder- Aussenwand entspricht. Das Führungsstück 230 ist gegenüber der Verbindungskoppel 228 nur drehbar, nicht aber in achsialer Richtung verschiebbar gelagert. Idealerweise wird das ganze polystabile Positionierelement 215 linear geführt, in Figur 3 schematisch durch das Lager 242 dargestellt, in dem auch der Führungsbolzen 229 direkt integriert ist. So geführt muss aber die Verbindungskoppel 228 ein Gelenk 248 aufweisen oder zumindest elastisch ausgebildet sein. Die Führungsnut 231 ist so gestaltet, dass durch die lineare Verschiebung des Führungsstücks 230 gegenüber dem feststehenden Führungsbolzen 229, das Führungsstück 230 jeweils mittels Flankenabschnitten 243, 244, 245, 246, 247 der Führungsnut 231 in die richtige Lage gedreht wird, so dass der Führungsbolzen 229 die in Figur 3 dargestellte Führungsnut 231 stets im Uhrzeigersinn durchläuft. Dabei ist wichtig, dass das Führungsstück 230 gegenüber der Verbindungskoppel 228 oder dem Lager 242 eine gewisse Lagerreibung aufweist, so dass das Führungsstück 230 den jeweils durch eine Flanke der Führungsnut 231 definierten Drehwinkel beibehält, bis die nächste Flanke das Führungsstück 230 weiterdreht. Dadurch können Vibrationen oder Schläge nicht zu Fehlfunktionen führen. Das in Figur 3 dargestellte Führungsstück 230 ist für oszillierende Drehbewegungen ausgelegt, es sind aber auch umlaufende Führungsstücke mit vorgegebenem Umlaufsinn einsetzbar, wie sie die Schreibwarenindustrie beispielsweise in Kugelschreibern verwendet. Insbesondere eignet sich diese Ausführungsform mit oszillierenden oder umlaufenden Führungsstücken für Anwendungen, welche zwischen der Kalibrierposition und der Ruheposition weitere stabile Positionen erfordern.

Zwecks Verdeutlichung der Funktionsweise und des Bewegungsablaufs des oszillierenden Führungsstückes 230 sind in den Figuren 4a bis 4f die wichtigsten Positionen dargestellt. Ausgehend von der in Figur 3 dargestellten Ruheposition 233 beginnt der Aktuator 218 infolge der Zuführung von Energie das Führungsstück 230 durch das Lager 242 zu ziehen. Im ersten Teilabschnitt 234 wird durch den Kontakt des Führungsbolzens 229 mit der ersten Flanke 243 das Führungsstück 230 in Richtung D gedreht, wie dies in Figur 4a dargestellt ist. Sobald der Führungsbolzen 229 den zweiten Teilabschnitt 235 und damit die zweite Flanke 244 erreicht, dreht sich das Führungsstück 230 in Richtung U, bis der Führungsbolzen 299 den ersten Umkehrpunkt 238 erreicht hat, siehe Figur 4b. Die Energiezufuhr zum Aktuator 218 wird nun unterbrochen und die Rückstellkraft des Rückstellelementes 222 zieht das Führungsstück 230 in die entgegen gesetzte Richtung durch das Lager 242, bis die Kalibrierposition 232, wie in Figur 4c dargestellt, durch den Führungsbolzen 229 erreicht wird. In dieser Phase dreht sich das Führungsstück 230 infolge der dritten Flanke 245 weiter in Richtung U. Um den Führungsbolzen 229 durch den dritten Teilabschnitt 236 zu bewegen, muss dem Aktuator 218 wieder Energie zugeführt werden, bis der Führungsbolzen 229 den zweiten Umkehrpunkt 239 erreicht. Dabei wird das Führungsstück nochmals durch die vierte Flanke 246 in Richtung U gedreht und wird wie in Figur 4d dargestellt, durch den Aktuator 218 durch das Lager 242 gezogen. Wenn der Führungsbolzen 229 wie in Figur 4e den zweiten Umkehrpunkt 239 erreicht hat, wird die Energiezufuhr zum Aktuator 218 wieder unterbrochen, die Bewegungsrichtung wechselt und das Rückstellelement 222 zieht das Führungsstück 230 wieder in Richtung Ruheposition 233 durch den vierten Teilabschnitt 237. Im vierten Teilabschnitt 237 wird durch die Einwirkung des Führungsbolzens 229 auf die fünfte Flanke 247 das Führungsstück 230 in Richtung D wieder in die Ausgangslage gedreht, siehe Figur 4f.

Selbstverständlich könnte das Führungsstück 230 auch eine Führungsnut 131 aufweisen, wie sie in Figur 2 dargestellt ist. Das Führungsstück 230 müsste aber dann, um den richtigen Umlaufsinn des Führungsbolzens 229 gegenüber der Führungsnut 131 sicherzustellen, mittels Federkraft, beispielsweise durch eine Torsionsstabfeder, in die jeweils richtige Drehrichtung vorgespannt werden.

Neben den bisher vorgestellten Kalibriergewichtsanordnungen besteht auch die Möglichkeit, das Kniegelenk sowie weitere Funktionsteile des Hebesystems wie der bewegliche Teil des Positionierelementes, einstückig auszuformen und beispielsweise mit einem Transfermechanismus, ähnlich dem in den Figuren 2 und 3 gezeigten, zu kombinieren. Ein derartiges Hebesystem 310 einer Kalibriergewichtsanordnung 302 mit einem einstückig ausgebildeten Kniegelenk 317 ist in Figur 5 dargestellt.

Figur 5 zeigt das Kniegelenk 317 in einem gestrecken Zustand, d. h. das Kniegelenk 317 ist senkrecht ausgerichtet und befindet sich in einer Position nahe der Ruheposition, ohne dass das Kniegelenk 317 an einen Anschlag gedrückt wird. Die mit unterbrochenen Linien dargestellten Konturen deuten an, dass sich diese Elemente in einer hinteren Zeichnungsebene befinden und normalerweise verdeckt wären.

Das Hebesystem 310 ist einstückig, vorzugsweise aus einem technischen Kunststoff gefertigt. Es besteht aus drei miteinander verbundenen Funktionsbereichen. Der erste Funktionsbereich 325 weist zwei Befestigungspunkte 344 zur Befestigung eines Anschlagelements 343 und ein Langloch 326 auf. Das Anschlagelement 343 und das Kniegelenk 317 sind fest miteinander verbunden und können auch als ein einziges Bauteil realisiert werden. Der zweite Funktionsbereich 340 ist mit dem ersten Funktionsbereich 325 erstens über ein Biegelager 324 und zweitens über eine Zugfeder als Rückstellelement 322 verbunden. Der zweite Funktionsbereich 340 weist zudem eine Lagerstelle 348 auf, deren Lagerachse 351 den zweiten Funktionsbereich 340 in der ausgedehnten Ebene des Hebesystems 310 drehbar über eine Lagerplatte 349 gegen eine Basis 39 abstützt. Ebenfalls mit der Lagerplatte 349 parallel zur Lagerachse 351 starr verbunden, ist ein Führungsstift 352. Dieser Führungsstift 352 greift in das Langloch 326 ein und begrenzt somit den Bewegungsbereich des ersten Funktionsbereichs 325. Die translatorische Bewegung wird durch die Länge des Langlochs 326 begrenzt, die rotatorische Bewegung über das Biegelager 324 durch die Lagerstelle 348 des zweiten Funktionsbereichs 340. Der dritte Funktionsbereich 330 ist durch ein Dünnstellenbiegelager 327 mit dem ersten Funktionsbereich 325 ebenfalls einstückig verbunden. Der dritte Funktionsbereich 330 weist die bereits aus Figur 2 bekannte Führungsnut 331 auf. Anders als bei Figur 2 wird in Figur 5 die Führungsnut 331 gegenüber eines, mit der Basis 39 starr verbundenen Führungsbolzens 329 bewegt. In der dargestellten Ruheposition übt das Dünnstellenbiegelager 327 ein Moment M- auf den dritten Bereich 330 aus, so dass die Führungsnut 331 von der Basis 39 weg gegen den Führungsbolzen 329 gedrückt wird. Der Führungsbolzen 329 folgt der Führungsnut 331 somit im Uhrzeigersinn.

Wie in Figur 5 dargestellt, ist der Kraftangriffspunkt 360 des Aktuators 318 in der Mitte des Biegelagers 324 positioniert. Dies bedeutet aber nicht, dass der Aktuator 318 auch zwingend mit dem Biegelager 324 verbunden werden muss, er kann auch am Anschlagelement 343 oder sogar am zweiten Funktionsbereich 340 festgelegt werden. Je näher der Kraftangriffspunkt 360 zur Lagerachse 351 oder zum Führungsstift 352 angeordnet ist, desto weniger Weg muss der Aktuator 318 aufbringen, gemäss dem Hebelgesetz dafür aber eine grössere Kraft.

Das Anschlagelement 343 weist ein mit der Lagerachse 351 korrespondierendes, bogenförmiges Langloch 353 auf. Dieses dient dem Schutz des Biegelagers 324 vor Überlasten, da einerseits der Biegewinkel des Biegelagers 324 durch die Bogenlänge des bogenförmigen Langlochs 353 begrenzt wird und andererseits Kraftspitzen durch Stösse in orthogonaler Richtung zur Basis 39 direkt über die Flanken des bogenförmigen Langlochs 353 auf die Lagerachse 351 übertragen werden.

Beim Kalibriervorgang des gravimetrischen Messgeräts übt der Aktuator 318 einen bezogen auf die Zeichnung nach rechts gerichteten Zug auf das Anschlagelement 343 aus. Dies bewirkt, dass der zweite Bereich 340 auslenkt, in dem er sich leicht um die Lagerachse 351 dreht und das Kniegelenk 317 einknickt. Der Aktuator 318 bewirkt zudem, dass sich das Rückstellelement 322 spannt und sich das Biegelager 324 biegt. Dadurch schwenkt das Anschlagelement 343 und der erste Bereich 325 des Kniegelenks 317 nach rechts und wird zusätzlich gegen die Basis 39 gezogen. Die Kalibriergewichtsauflage 321 wird nach unten bewegt und das Kalibriergewicht in Kraftkontakt mit der Kraftmesszelle gebracht.

Eine Formgedächtnislegierung verkürzt sich um einen gewissen Prozentsatz, z. B. verkürzt sich eine Nickel-Titan-Legierung mit einer Phasenübergangstemperatur von etwa 90°C und einem Ni-Anteil von ca. 50 % um etwa 4 %. Der Draht 318 ist allerdings flexibel und kann beispielsweise in der hier dargestellten Art über zwei Rollen 380 aus einem elektrisch und thermisch nicht leitenden, gleitenden technischen Kunststoff, beispielsweise Teflon, mehrfach umgelenkt. Der Draht kann auch über ein oder mehrere Umlenkmittel wie Hebel und/oder Rollen umgelenkt werden.

In Figur 6 ist lediglich noch der dritte Funktionsbereich 430 einer ansonsten mit der Figur 5 identischen Kalibriergewichtsanordnung 402 dargestellt. Statt der Führungsnut 331 aus Figur 5, welche wie in allen vorangehenden Abbildungen eine bistabile Positionierungsfunktion hat, weist die Führungsnut 431 des polystabilen Positionierelements 415 eine tristabile Positionierungsfunktion auf. Zwischen der Ruheposition 433 und der Kalibrierposition 432 befindet sich eine erste stabile Zwischenposition 490. Bei polystabilen Positionierelementen mit noch mehr Zwischenpositionen werden analog der dargestellten tristabilen Führungsnut 431 die weiteren stabilen Zwischenpositionen zwischen der Ruheposition 433 und der Kalibrierposition 432 angeordnet. Der Funktionsablauf eines tristabilen Positionierelementes beziehungsweise polystabiler Positionierelemente mit noch mehr Zwischenpositionen unterscheidet sich nicht wesentlich vom Funktionsablauf bistabiler Lösungen. Pro Zwischenposition muss lediglich ein weiterer Energieimpuls dem Aktuator zugeführt werden um wieder zur Ausgangsposition zu gelangen. Dabei muss die Biegemomentumkehr in der Dünnstellenbiegefeder 427 jeweils dann erfolgen, wenn sich der Führungsbolzen 429 zwischen der Ruheposition 433 und der Kalibrierposition 432 beziehungsweise zwischen der Ruheposition 433 und der ersten stabile Zwischenposition 490 befindet.

Neben dem erwähnten, eine Formgedächtnislegierung umfassenden Aktuator ohne Selbsthemmung, kann prinzipiell jeder handelsübliche Antrieb ohne Selbsthemmung und vorzugsweise jeder lineare Antrieb verwendet werden, wenn dieser die Anforderungen für den Antrieb einer Kalibriergewichtsanordnung eines gravimetrischen Messgeräts, vorzugsweise einer elektronischen Waage erfüllt. Bekannte lineare Antriebe umfassen u. a. Spindel-Antriebe, Riemen-Antriebe, magnetische Antriebe oder Linearmotoren. Selbst manuell betätigbare Lösungen sind einsetzbar.

Als Rückstellelemente wurden in den Ausführungsbeispielen vor allem Federn wie Schraubendruckfedern, Zugfedern und Blattfedern beschrieben. Neben diesen explizit erwähnten Federtypen, können selbstverständlich auch andere Arten von Federn oder Bauteile mit vergleichbarer Wirkung eingesetzt werden. Je nach aufzubringender Rückstellkraft können ein oder mehrere Rückstellelemente eingesetzt werden.

Die erwähnte Kraftmesszelle stellt nur eine der bekannten Arten von Kraftmesszellen dar. Die erfindungsgemässe Kalibriergewichtsanordnung kann auch mit anderen Kraftmesszellen eingesetzt werden.

In den Figuren 2, 3 und 5 ist der Angriffspunkt des Aktuators jeweils am Kniegelenk gezeigt, wobei auch andere Angriffspunkte realisiert werden können.

Der in Figur 3 dargestellte Anschlag 241 ist nur beispielhaft als eine Art Gehäusewand ausgeformt, es sind auch jegliche andere Ausführungen mit derselben Wirkung oder Funktion möglich, die selbstverständlich auch in geeigneter Weise bei einer Ausführung nach Figur 3 eingesetzt werden können.

### Bezugszeichenliste

- 1: Gravimetrisches Messgerät, Waage
- 402, 302, 202, 102, 2: Kalibriergewichtsanordnung
- 3: feststehender Bereich
- 4: Parallelogrammlenker
- 5: Lastaufnahmebereich
- 6: Kraftmesszelle
- 7: Konus
- 8: Hebelwerk
- 9: Hebel
- 11: Kraftkompensationssystem
- 12: Schnittlinie
- 13: Kalibriergewichtsarm
- 14: Kalibriergewicht
- 16: Parkbügel
- 321, 221, 121 ,21: Kalibriergewichtsauflage
- 39: Basis
- 40: Träger
- 41: Befestigungsmittel
- 310,210, 110: Hebesystem
- 415 ,215, 115: polystabiles Positionierelement
- 317,217,117: Kniegelenk
- 318, 218, 118: Aktuator ohne Selbsthemmung, SMA-Draht
- 119: elektrische Zuleitung
- 322, 222, 122: Rückstellelement
- 223, 123: Führungsstange
- 224, 124: Verbindungslasche
- 225, 125: Gelenkarm
- 226, 126: Gelenklager
- 427, 327, 127: Dünnstellenbiegefeder
- 128: Führungskoppel
- 429, 329, 229, 129: Führungsbolzen
- 230, 130: Führungsstück
- 431, 331, 231, 131: Führungsnut
- 432, 232, 132: Kalibrierposition, Herzkuhle
- 433, 233, 133: Ruheposition, Herzspitze
- 234, 134: erster Teilabschnitt
- 235, 135: zweiter Teilabschnitt
- 236, 136: dritter Teilabschnitt
- 237, 137: vierter Teilabschnitt
- 238, 138: erster Umkehrpunkt
- 239, 139: zweiter Umkehrpunkt
- 240, 140: Lagerblock
- 228: Verbindungskoppel
- 243: erste Flanke
- 244: zweite Flanke
- 245: dritte Flanke
- 246: vierte Flanke
- 247: fünfte Flanke
- 248: Gelenk
- 249: Mittekontur
- 241: Anschlag
- 242: Lager
- 324: Biegelager
- 325: erster Funktionsbereich
- 326: Langloch
- 430, 330: dritter Funktionsbereich
- 340: zweiter Funktionsbereich
- 343: Anschlagelement
- 344: Befestigungspunkt
- 348: Lagerstelle
- 349: Lagerplatte
- 351: Lagerachse
- 352: Führungsstift
- 353: bogenförmiges Langloch
- 360: Kraftangriffspunkt
- 380: Rolle
- 490: erste stabile Zwischenposition

## Patentansprüche

1. Kalibriergewichtsanordnung (102) für ein gravimetrisches Messgerät (1) mit einer, einen feststehenden Bereich (3) und einen Lastaufnahmebereich (5) aufweisenden Kraftmesszelle (6), wobei die Kalibriergewichtsanordnung (102) mindestens ein mit dem Lastaufnahmebereich (5) koppelbares Kalibriergewicht (14) und einen Transfermechanismus umfasst und der Transfermechanismus mindestens ein Rückstellelement (122), ein Hebesystem (110) und einen Antrieb beinhaltet um das mindestens eine Kalibriergewicht (14) während einer Bewegungsphase von einer Ruheposition in eine Kalibrierposition beziehungsweise von der Kalibrierposition in die Ruheposition zu transferieren, **dadurch gekennzeichnet, dass** der Transfermechanismus mindestens ein polystabiles Positionierelement (115) aufweist, dessen erster stabiler Zustand die Kalibrierposition (132) und dessen zweiter stabiler Zustand die Ruheposition (133) des Transfermechanismus definiert, und dass der Antrieb ein Aktuator ohne Selbsthemmung (118) ist, dem nur in der Bewegungsphase des Transfermechanismus Energie zugeführt wird.

2. Kalibriergewichtsanordnung (102) nach Anspruch 1, **dadurch gekennzeichnet, dass** die Rückstellkraft des Rückstellelements (122) grösser ist als die maximale Gewichtskraft des Kalibriergewichts (14) oder der Kalibriergewichte und die in Lastrichtung wirkenden Kräfte des Transfermechanismus sowie dessen Reibungswiderstände, und dass die Rückstellkraft des Rückstellelements (122) den Transfermechanismus in den durch das polystabile Positionierelement (115) definierten Positionen, beispielsweise in der Kalibrierposition (132) beziehungsweise in der Ruheposition (133) hält.

3. Kalibriergewichtsanordnung (102) nach einem der Ansprüche 1 oder 2, **dadurch gekennzeichnet, dass** dem Aktuator (118) Energie in Form von Energieimpulsen zugeführt wird.

4. Kalibriergewichtsanordnung (102) nach einem der Ansprüche 1 bis 3, **dadurch gekennzeichnet, dass** zu Beginn jeder Bewegungsphase jeweils nur ein Energieimpuls dem Aktuator (118) zugeführt wird, welcher ausreicht, das Kalibriergewicht (14) beispielsweise von der Ruheposition in die Kalibrierposition beziehungsweise von der Kalibrierposition in die Ruheposition zu transferieren.

5. Kalibriergewichtsanordnung (102) nach einem der Ansprüche 1 bis 4, **dadurch gekennzeichnet, dass** das Hebesystem (110) mindestens ein Kniegelenk (117) umfasst.

6. Kalibriergewichtsanordnung (102) nach einem der Ansprüche 1 bis 5, **dadurch gekennzeichnet, dass** das polystabile Positionierelement (415) ein tristabiles Positionierelement ist, dessen erste stabile Zwischenposition (490) zwischen der Kalibrierposition (432) und der Ruheposition (433) angeordnet ist.

7. Kalibriergewichtsanordnung (102) nach einem der Ansprüche 1 bis 5, **dadurch gekennzeichnet, dass** das polystabile Positionierelement (115) ein bistabiles Positionierelement ist.

8. Kalibriergewichtsanordnung (102) nach Anspruch 7, **dadurch gekennzeichnet, dass** das bistabile Positionierelement (115) einen Führungsbolzen (129) und ein Führungsstück (130) mit einer Führungsnut (131) aufweist, wobei die Führungsnut (131) einen ersten Teilabschnitt (134), einen zweiten Teilabschnitt (135), die Kalibrierposition (132), einen dritten Teilabschnitt (136), einen vierten Teilabschnitt (137) und die Ruheposition (133) beinhaltet und dem Aktuator (118) nur dann Energie zugeführt wird, wenn der Führungsbolzen (229) den ersten Teilabschnitt (134) und den zweiten Teilabschnitt (135) bis zu einem ersten Umkehrpunkt (138) durchläuft, beziehungsweise den dritten Teilabschnitt (136) ausgehend von der Kalibrierposition (132) bis zu einem zweiten Umkehrpunkt (139) durchläuft.

9. Kalibriergewichtsanordnung (102) nach einem der Ansprüche 7 oder 8, **dadurch gekennzeichnet, dass** das bistabile Positionierelement (115) mindestens ein Führungsstück (130) mit einer Führungsnut (131) in Herzform, deren Herzformspitze (133) der Ruheposition (133) und deren Herzformkuhle (132) der Kalibrierposition (132) entspricht, sowie mindestens einer, in die Führungsnut (131) greifender, mit dem feststehenden Bereich (3) verbundener Führungsbolzen (129) aufweist.

10. Kalibriergewichtsanordnung (102) nach einem der Ansprüche 1 bis 9, **dadurch gekennzeichnet, dass** eine Dünnstellenbiegefeder (127) zwischen dem Hebesystem (110) und dem polystabilen Positionierelement (115) angeordnet ist, wobei die Dünnstellenbiegefeder (127) dann in biegespannungsneutralem Zustand ist, wenn sich der Führungsbolzen (129) zwischen der Kalibrierposition (132) und der Ruheposition (133) befindet.

11. Kalibriergewichtsanordnung (202) nach einem der Ansprüche 1 bis 9, **dadurch gekennzeichnet, dass** das polystabile Positionierelement (215) mindestens ein Führungsstück (230) in Form einer mit dem Hebesystem (210) verbundenen, drehbar gelagerten Walze oder Hülse aufweist, wobei deren Zylindermantel mindestens eine Führungsnut (231) mit mindestens den zwei Positionen Kalibrierposition (132) und Ruheposition (133) beinhaltet, in welche Führungsnut (231) mindestens ein mit dem feststehenden Bereich (3) verbundener Führungsbolzen (229) eingreift.

12. Kalibriergewichtsanordnung (102) nach einem der Ansprüche 1 bis 11, **dadurch gekennzeichnet, dass** das Rückstellelement (122) eine Schenkelfeder, eine Torsionsstabfeder, eine Blattfeder, eine Schraubendruckfeder oder eine Zugfeder ist.

13. Kalibriergewichtsanordnung (102) nach einem der Ansprüche 1 bis 12, **dadurch gekennzeichnet, dass** das mindestens eine Rückstellelement (122), das Hebesystem (110) und das polystabile Positionierelement (115) mindestens drei Formteile umfasst, welche direkt oder über geeignete Verbindungsmittel miteinander verbunden sind.

14. Kalibriergewichtsanordnung (302) nach einem der Ansprüche 1 bis 12, **dadurch gekennzeichnet, dass** das mindestens eine Rückstellelement (322), das Hebesystem (310) und mindestens ein Teil des polystabilen Positionierelementes (330) einstückig ausgeformt ist.

15. Kalibriergewichtsanordnung (102) nach einem der Ansprüche 1 bis 14, **dadurch gekennzeichnet, dass** der Aktuator ohne Selbsthemmung (118) ein Linearantrieb, beispielsweise ein Linearmotor, ein Spindelantrieb, ein Riemen-Antrieb, ein magnetischer Antrieb, ein mit einer Heizvorrichtung zusammenwirkender Draht aus einer Formgedächtnislegierung oder eine manuell zu betätigende Vorrichtung ist.

16. Kalibriergewichtsanordnung (302) nach einem der Ansprüche 1 bis 15, **dadurch gekennzeichnet, dass** der Aktuator ohne Selbsthemmung (118) über mindestens eine Rolle (380) oder mindestens einen Hebel auf den Transfermechanismus einwirkt.

17. Verfahren zur Überprüfung und Definition des Zustandes einer Kalibriergewichtsanordnung (102) mit einem polystabilen Positionierelement nach einem der Ansprüche 1 bis 16, **dadurch gekennzeichnet, dass**
a. ein Referenzsignalwert der Kraftmesszelle ermittelt wird und dieser Referenzsignalwert mit der Positionsnummer eins abgespeichert wird,
b. jede weitere stabile Position des polystabilen Positionierelementes durchlaufen wird bis wieder die Position des Referenzsignalwertes erreicht ist, wobei jeweils ein Wägesignalwert der Kraftmesszelle (6) in jeder stabilen Position ermittelt, und dieser in der durchlaufenen Reihenfolge mit Positionsnummem abgespeichert wird,
c. die Wägesignalwerte und der Referenzsignalwert miteinander verglichen werden, wobei der kleinste Signalwert ermittelt, und dessen Position zur Position des Referenzwertes ermittelt wird,
d. ausgehend von der Position des Referenzwertes die stabilen Positionen des polystabilen Positionierelementes durchlaufen werden, bis die Position mit dem kleinsten Signalwert erreicht ist.

18. Verfahren zur Überprüfung und Definition des Zustandes einer Kalibriergewichtsanordnung (102) mit einem bistabilen Positionierelement nach einem der Ansprüche 7 bis 16, **dadurch gekennzeichnet, dass**
a. ein Referenzsignalwert der Kraftmesszelle ermittelt und abgespeichert wird,
b. dem Aktuator ein Energieimpuls zugeführt wird,
c. ein Wägesignalwert der Kraftmesszelle ermittelt wird,
d. der Referenzwert mit dem Wägesignalwert verglichen wird,
e. dem Aktuator ein weiterer Energieimpuls zugeführt wird, sofern der Wägesignalwert grösser ist als der Referenzsignalwert.

## Claims

1. Calibration weight arrangement (102) for a gravimetric measuring instrument (1) with a force-measuring cell (6) that comprises a fixed part (3) and a load-receiving part (5), wherein the calibration weight arrangement (102) comprises at least one calibration weight (14) which can be coupled to the load-receiving part (5), and wherein the calibration weight arrangement (102) further comprises a transfer mechanism, the latter having at least one resetting element (122), a lifting system (110) and a drive source serving to transfer the at least one calibration weight (14) during a phase of movement from a rest position into a calibrating position, and from the calibrating position into the rest position, **characterized in that** the transfer mechanism comprises at least one multi-stable positioning element (115) whose first stable state defines the calibrating position (132) and whose second stable state defines the rest position (133) of the transfer mechanism, and further **characterized in that** the drive source is an actuator (118) that is not self-locking and is energized only during the movement phase of the transfer mechanism.

2. Calibration weight arrangement (102) according to claim 1, **characterized in that** the resetting force of the resetting element (122) is larger than the maximum weight force of the calibration weight (14) or of the sum of the maximum weight force of the calibration weights and of the forces of the transfer mechanism that act in the direction of the load as well as of the resistance forces resulting from friction in the transfer mechanism, and further **characterized in that** the resetting force of the resetting element (122) holds the transfer mechanism in the position defined by the multi-stable positioning element (115), for example in the calibrating position (132) or in the rest position (133).

3. Calibration weight arrangement (102) according to one of the claims 1 or 2, **characterized in that** the actuator (118) is supplied with energy in the form of energy pulses.

4. Calibration weight arrangement (102) according to one of the claims 1 to 3, **characterized in that** at the beginning of each movement phase only one energy pulse is sent to the actuator (118) which is sufficient to transfer the calibration weight (14) for example from the rest position into the calibrating position, or from the calibrating position into the rest position.

5. Calibration weight arrangement (102) according to one of the claims 1 to 4, **characterized in that** the lifting system (110) comprises at least one knee-joint linkage (117).

6. Calibration weight arrangement (102) according to one of the claims 1 to 5, **characterized in that** the multi-stable positioning element (415) is a tri-stable positioning element whose first stable intermediate position (490) is arranged between the calibrating position (432) and the rest position (433).

7. Calibration weight arrangement (102) according to one of the claims 1 to 5, **characterized in that** the multi-stable positioning element (115) is a bi-stable positioning element.

8. Calibration weight arrangement (102) according to claim 7, **characterized in that** the bi-stable positioning element (115) comprises a guide bolt (129) and a guide element (130) with a guide groove (131), wherein the guide groove (131) comprises a first segment (134), a second segment (135), a calibrating position (132), a third segment (136), a fourth segment (137) and the rest position (133), and wherein the actuator (118) is energized only during the times when the guide bolt (229) moves through the first segment (134) and the second segment (135) to a first turn-around point (138), and when the guide bolt (229) moves through the third segment (136) starting from the calibrating position (132) and proceeding to a second turn-around point (139).

9. Calibration weight arrangement (102) according to one of the claims 7 or 8, **characterized in that** the bi-stable positioning element (115) comprises at least one guide element (130) with a heart-shaped guide groove (131), wherein the outward-pointing corner (133) of the heart shape represents the rest position (133) and the inward-pointing cusp (132) of the heart shape represents the calibrating position (132), and further comprises at least one guide bolt (129) which is engaged in the guide groove (131) and is connected to the fixed part (3).

10. Calibration weight arrangement (102) according to one of the claims 1 to 9, **characterized in that** a thin bending-spring connection (127) is arranged between the lifting system (110) and the multi-stable positioning element (115), wherein the thin bending-spring connection (127) is in a neutral state in regard to bending stresses when the guide bolt (129) is between the calibrating position (132) and the rest position (133).

11. Calibration weight arrangement (202) according to one of the claims 1 to 9, **characterized in that** the multi-stable positioning element (215) comprises at least one guide element (230) in the form of a rotatably supported cylinder or sleeve that is connected to the lifting system (210), whose cylinder wall comprises at least one guide groove (231) with at least the two positions that represent the calibrating position (132) and the rest position (133), which guide groove (231) is engaged by at least one guide bolt (229) that is connected to the fixed part (3).

12. Calibration weight arrangement (102) according to one of the claims 1 to 11, **characterized in that** the resetting element (122) is an arm spring, a torsion-bar spring, a leaf spring, a compressive coil spring, or a tensile coil spring.

13. Calibration weight arrangement (102) according to one of the claims 1 to 12, **characterized in that** the at least one resetting element (122), the lifting system (110) and the multi-stable positioning element (115) comprise at least three formed components which are connected to each other directly or through suitable connecting means.

14. Calibration weight arrangement (302) according to one of the claims 1 to 12, **characterized in that** the at least one resetting element (322), the lifting system (310), and at least a part of the multi-stable positioning element (115) are formed together as one monolithic piece.

15. Calibration weight arrangement (102) according to one of the claims 1 to 14, **characterized in that** the non-self-locking actuator (118) is a linear driving mechanism, for example a linear motor, a spindle drive, a belt drive, a magnetic drive, a wire of a shape memory alloy that cooperates with a heating device, or a manually operated device.

16. Calibration weight arrangement (302) according to one of the claims 1 to 15, **characterized in that** the non-self-locking actuator (118) acts on the transfer mechanism by way of at least one pulley (380) or at least one lever.

17. Method of checking and defining the state of a calibration weight arrangement (102) with a multi-stable positioning element according to one of the claims 1 to 16, **characterized in that**:
a. a reference signal value of the force-measuring cell is determined and said reference signal value is stored in memory with the position number one,
b. each further stable position is passed through until the position of the reference signal value is reached again, wherein a respective weighing signal value of the force measuring cell (6) is determined in each stable position, and said respective weighing signal value is stored with a position number in the order of sequence in which said stable position was passed through,
c. the weighing signal values and the reference signal value are compared with each other, whereby the smallest signal value is determined and its position is determined relative to the position of the reference value,
d. starting from the position associated with the reference value, the stable positions of the multi-stable positioning element are passed through until the position with the smallest signal value has been reached.

18. Method of checking and defining the state of a calibration weight arrangement (102) with a bi-stable positioning element according to one of the claims 7 to 16, **characterized in that**:
a. a reference signal value of the force-measuring cell is determined and said reference signal value is stored in memory,
b. an energy pulse is supplied to the actuator,
c. a weighing signal value of the force-measuring cell is determined,
d. said reference value is compared to the weighing signal value,
e. a further energy pulse is supplied to the actuator if said weighing signal value is larger than the reference signal value.

## Revendications

1. Dispositif de poids d' étalonnage (102) pour un appareil de mesure (1) gravimétrique comprenant une cellule de mesure de force (6) présentant une zone (3) fixe et une zone de suspension de charge (5), le dispositif de poids d' étalonnage (102) comportant au moins un poids de calibrage (14) pouvant être couplé avec la zone de suspension de charge (5) et un mécanisme de transfert et le mécanisme de transfert contenant au moins un élément de rappel (122), un système de levage (110) et un entraînement afin de transférer le au moins un poids de calibrage (14) pendant une phase de déplacement d'une position de repos à une position de calibrage ou de la position de calibrage à la position de repos, **caractérisé en ce que** le mécanisme de transfert présente au moins un élément de positionnement (115) polystable, dont le premier état stable définit la position de calibrage (132) et dont le second état stable définit la position de repos (133) du mécanisme de transfert, et **en ce que** l'entraînement est un actionneur sans autoblocage (118), auquel de l'énergie est amenée uniquement lors de la phase de déplacement du mécanisme de transfert.

2. Dispositif de poids d' étalonnage (102) selon la revendication 1, **caractérisé en ce que** la force de rappel de l'élément de rappel (122) est supérieure à la force de poids maximale du poids de calibrage (14) ou des poids de calibrage et les forces, agissant dans le sens de charge, du mécanisme de transfert et ses résistances de frottement, et **en ce que** la force de rappel de l'élément de rappel (122) maintient le mécanisme de transfert dans les positions définies par l'élément de positionnement (115) polystable, par exemple dans la position de calibrage (132) ou dans la position de repos (133).

3. Dispositif de poids d'étalonnage (102) selon l'une quelconque des revendications 1 ou 2, **caractérisé en ce que** de l'énergie sous forme d'impulsions d'énergie est amenée à l'actionneur (118).

4. Dispositif de poids d'étalonnage (102) selon l'une quelconque des revendications 1 à 3, **caractérisé en ce que**, au début de chaque phase de déplacement, seule une impulsion d'énergie est amenée à chaque fois à l'actionneur (118), qui est suffisante pour transférer le poids de calibrage (14) par exemple de la position de repos à la position de calibrage ou de la position de calibrage à la position de repos.

5. Dispositif de poids d' étalonnage (102) selon l'une quelconque des revendications 1 à 4, **caractérisé en ce que** le système de levage (110) comporte au moins une articulation coudée (117).

6. Dispositif de poids d' étalonnage (102) selon l'une quelconque des revendications 1 à 5, **caractérisé en ce que** l'élément de positionnement (415) polystable est un élément de positionnement tristable, dont la première position intermédiaire (490) stable est disposée entre la position de calibrage (432) et la position de repos (433).

7. Dispositif de poids d' étalonnage (102) selon l'une quelconque des revendications 1 à 5, **caractérisé en ce que** l'élément de positionnement (115) polystable est un élément de positionnement bistable.

8. Dispositif de poids d'étalonnage (102) selon la revendication 7, **caractérisé en ce que** l'élément de positionnement (115) bistable présente un boulon de guidage (129) et une pièce de guidage (130) avec une rainure de guidage (131), la rainure de guidage (131) contenant un premier tronçon partiel (134), un second tronçon partiel (135), la position de calibrage (132), un troisième tronçon partiel (136), un quatrième tronçon partiel (137) et la position de repos (133) et de l'énergie étant amenée à l'actionneur (118) uniquement dans le cas où le boulon de guidage (229) traverse le premier tronçon partiel (134) et le second tronçon partiel (135) jusqu'à un premier point d'inversion (138), ou parcourt le troisième tronçon partiel (136) à partir de la position de calibrage (132) jusqu'à un second point d'inversion (139).

9. Dispositif de poids d'étalonnage (102) selon l'une quelconque des revendications 7 ou 8, **caractérisé en ce que** l'élément de positionnement (115) bistable présente au moins une pièce de guidage (130) avec une rainure de guidage (131) sous forme de coeur, dont la pointe en forme de coeur (133) correspond à la position de repos (133) et dont le creux en forme de coeur (132) correspond à la position de calibrage (132), et au moins un boulon de guidage (129) s'engageant dans la rainure de guidage (131) et relié à la zone (3) fixe.

10. Dispositif de poids d'étalonnage (102) selon l'une quelconque des revendications 1 à 9, **caractérisé en ce qu'**un ressort de flexion à endroit mince (127) est disposé entre le système de levage (110) et l'élément de positionnement (115) polystable, le ressort de flexion à endroit mince (127) se trouvant dans un état neutre au niveau de la tension de flexion lorsque le boulon de guidage (129) se trouve entre la position de calibrage (132) et la position de repos (133).

11. Dispositif de poids d' étalonnage (202) selon l'une quelconque des revendications 1 à 9, **caractérisé en ce que** l'élément de positionnement (215) polystable présente au moins une pièce de guidage (230) sous la forme d'un cylindre ou d'un manchon relié au système de levage (210) et logé de façon rotative, son enveloppe cylindrique contenant au moins une rainure de guidage (231) avec au moins les deux positions, position de calibrage (132) et position de repos (133), rainure de guidage (231) dans laquelle s'engage au moins un boulon de guidage (229) relié à la zone (3) fixe.

12. Dispositif de poids d'étalonnage (102) selon l'une quelconque des revendications 1 à 11, **caractérisé en ce que** l'élément de rappel (122) présente un ressort à branche, un ressort à barre de torsion, un ressort à lame, un ressort de pression hélicoïdal ou un ressort de traction.

13. Dispositif de poids d'étalonnage (102) selon l'une quelconque des revendications 1 à 12, **caractérisé en ce que** le au moins un élément de rappel (122), le système de levage (110) et l'élément de positionnement (115) polystable comportent au moins trois parties moulées, qui sont reliées les unes aux autres directement par des moyens de liaison appropriés.

14. Dispositif de poids d' étalonnage (302) selon l'une quelconque des revendications 1 à 12, **caractérisé en ce que** le au moins un élément de rappel (322), le système de levage (310) et au moins une partie de l'élément de positionnement (115) polystable sont formés d'une seule pièce.

15. Dispositif de poids d'étalonnage (102) selon l'une quelconque des revendications 1 à 14, **caractérisé en ce que** l'actionneur sans autoblocage (118) est un entraînement linéaire, par exemple un moteur linéaire, un entraînement de broche, un entraînement par courroie, un entraînement magnétique, un fil coopérant avec un dispositif de chauffage à base d'un alliage à mémoire de forme ou un dispositif à actionner manuellement.

16. Dispositif de poids d'étalonnage (302) selon l'une quelconque des revendications 1 à 15, **caractérisé en ce que** l'actionneur sans autoblocage (118) agit au moyen d'au moins un rouleau (380) ou au moyen d'un levier sur le mécanisme de transfert.

17. Méthode pour le contrôle et la définition de l'état d'un dispositif de poids d'étalonnage (102) avec un élément de positionnement polystable selon l'une quelconque des revendications 1 à 16, **caractérisé en ce que** :
a. une valeur de signal de référence de la cellule de mesure de force est déterminée et cette valeur de signal de référence est mémorisée avec le numéro de position 1,
b. toute autre position stable de l'élément de positionnement polystable est parcourue jusqu'à ce qu'à nouveau la position de la valeur de signal de référence soit atteinte, à chaque fois une valeur de signal de pesée de la cellule de mesure de force (6) étant déterminée dans chaque position stable, et cette valeur étant stockée dans l'ordre de succession parcouru avec des numéros de position,
c. les valeurs de signal de pesée et la valeur de signal de référence sont comparées les unes avec les autres, la plus petite valeur de signal étant déterminée, et sa position par rapport à la position de la valeur de référence étant déterminée,
d. les positions stables de l'élément de positionnement polystable étant parcourues à partir de la position de la valeur de référence jusqu'à ce que la position présentant la plus petite valeur de signal soit atteinte.

18. Méthode pour contrôler et définir l'état d'un dispositif de poids d'étalonnage (102) avec un élément de positionnement bistable selon l'une quelconque des revendications 7 à 16, **caractérisé en ce que**
a. une valeur de signal de référence de la cellule de mesure de force est déterminée et mémorisée,
b. une impulsion d'énergie est amenée à l'actionneur,
c. une valeur de signal de pesée de la cellule de mesure de force est déterminée,
d. la valeur de référence est comparée avec une valeur de signal de pesée,
e. une autre impulsion d'énergie est amenée à l'actionneur dans la mesure où la valeur du signal de pesée est supérieure à la valeur du signal de référence.
